# DEMANDE DE BREVET EUROPEEN

(11) **EP 3 808 173 A1**
(43) Date de publication de la demande: **21.04.2021**
(21) Numéro de dépôt: 20201870.1
(22) Date de dépôt: 14.10.2020
(51) Int. Cl.: A01K 1/01

(54) **ENCEINTE POUR L'ÉLEVAGE DES ANIMAUX, COMPORTANT UN COULOIR DE CIRCULATION ÉQUIPÉ D'UN SYSTÈME DE COLLECTE DES DÉJECTIONS**

(30) Priorité: 15.10.2019 FR 1911487
(60) Demande divisionnaire: 21158190.5
(71) Demandeur: Group Elastoteck, 44390 Nort sur Erdre (FR)
(72) Inventeur: BIORET, Jean-Vincent, 44390 Petit Mars (FR)
(74) Mandataire: Jacobacci Coralis Harle

(57) **Abrégé**

La présente invention concerne une enceinte pour l'élevage des animaux, par exemple des bovins, qui comporte un couloir de circulation (C) équipé d'un système de collecte (2) pour la collecte des déjections.

Ce système de collecte (2) comprend : (i) un revêtement de sol (3), comprenant une surface supérieure d'appui (31) et au moins une rigole (32) pour recevoir lesdites déjections par écoulement, (ii) des moyens de collecte (4), et (iii) des moyens de convoyage (5) pour convoyer les déjections au sein de ladite au moins une rigole (32).

Les moyens de convoyage (5) comprennent un organe d'entrainement (6) qui comporte deux parties superposées dans ladite au moins une rigole (32).

Et ladite surface supérieure d'appui (31) comprend au moins un couple (312) de bandes latérales (311), s'étendant sur la largeur dudit couloir de circulation (C). Dans ledit au moins un couple (312), lesdites bandes latérales (311) sont séparées par une rigole (32) et présentent chacune une pente descendante vers ladite au moins une ouverture supérieure (321) de ladite rigole (32), ladite pente étant orientée perpendiculairement audit axe longitudinal (C') de sorte que ledit au moins un couple (312) de bandes latérales (311) définit une face diédrique concave.

## Description

### Domaine technique de l'invention

La présente invention concerne le domaine technique des enceintes pour l'élevage des animaux, par exemple des bovins.

Elle concerne en particulier les enceintes comportant un couloir de circulation qui est équipé d'un système de collecte pour la collecte des déjections s'écoulant au sein dudit couloir de circulation.

### Etat de la technique

Le confort des animaux constitue un paramètre déterminant dans le rendement d'un élevage, qui influence notamment la santé, la prise alimentaire, la fertilité et la longévité des animaux.

Ce confort des animaux est régi en particulier par des obligations légales qui sont définies dans les Traités d'Amsterdam (1999) et de Lisbonne (2009) relatifs au Protocole sur la protection et le bien-être des animaux, ainsi que par l'adoption de la seconde stratégie européenne pour le bien-être animal.

En étable, ce confort implique notamment une évacuation rapide et efficace des déjections générées par les animaux.

Cette gestion des déjections doit en effet permettre de réduire les émanations de gaz et la prolifération de bactéries dans l'enceinte d'élevage, et par conséquent d'améliorer les conditions d'ambiance et les performances sanitaires.

Ces déjections sont en plus susceptibles de rendre le sol glissant, avec les risques de chute et de blessure qui en découlent.

Plusieurs systèmes d'évacuation des déjections coexistent à ce jour : les systèmes d'évacuation mécanique, les systèmes de « chasse d'eau » et les systèmes de caillebotis.

Dans le cadre d'une solution par « évacuation mécanique », les déjections présentes sur le sol sont raclées une à plusieurs fois par jour par un dispositif de raclage dénommé rabot (manœuvré par un tracteur ou par des moyens automatiques), pour être amenées jusqu'à une fosse de collecte située hors du bâtiment d'élevage.

Toutefois, la séparation des urines et des fèces n'est pas optimale au sein d'un tel système d'évacuation, constituant ainsi une source importante d'ammoniac. De plus, l'installation d'un tel système d'évacuation implique des travaux de gros œuvre importants, qui sont difficiles à envisager dans une enceinte d'élevage existante.

Avec une « chasse d'eau », un liquide de chasse évacue énergiquement les déjections dans un caniveau puis vers une fosse extérieure.

Or, là encore, la séparation des urines et des fèces n'est pas optimale au sein d'un tel système d'évacuation, constituant encore une source importante d'ammoniac. De plus, la mise en œuvre d'un tel système conduit à une humidification importante des sols de l'enceinte d'élevage, susceptible de générer des problèmes d'adhérence et d'hygiène.

Plus généralement, un revêtement de sol excessivement humide est susceptible de provoquer des problèmes sanitaires au niveau des pieds des animaux, notamment de boiteries, constituant un trouble majeur de santé en élevage.

Parmi les infections à l'origine de boiteries, la dermatite digitée, encore appelée « maladie de Mortellaro », est la plus problématique.

Il existe par conséquent un besoin de solutions techniques qui permettent une réduction de l'humidité des surfaces d'appui sur le sol des enceintes d'élevage tout en assurant une évacuation efficace des liquides (en particulier des urines), avantageusement cela sans nécessiter des travaux de gros œuvre importants, de sorte à améliorer les conditions d'adhérence et les conditions sanitaires des animaux.

Il existe également un intérêt pour des solutions simples qui permettent une certaine séparation des urines et des fèces, de manière à limiter la production d'ammoniac dans les enceintes d'élevage.

Afin de remédier à ces inconvénients de l'état de la technique, il existe des systèmes de collecte comprenant :
- un revêtement de sol, comprenant des profilés de guidage destinés à recevoir les déjections, et
- des moyens pour convoyer les déjections au sein de ces profilés de guidage, de manière à générer une circulation des déjections le long de ces profilés de guidage et en direction de moyens de collecte.

De tels systèmes de collecte permettent une évacuation automatique et continue des liquides (notamment des urines), ce qui confère une certaine réduction de la production d'ammoniaque.

En pratique, il serait intéressant d'améliorer encore l'efficacité de tels systèmes de collecte, cela de sorte à optimiser la séparation urines / fèces et limiter la production d'ammoniac.

En outre, il est utile de pouvoir simplifier encore l'implantation de tels systèmes de collecte dans une enceinte d'élevage, aussi bien nouvelle qu'existante (amélioration ou rénovation), cela sans nécessiter la mise en œuvre de travaux de gros œuvre importants.

### Présentation de l'invention

La présente invention concerne ainsi une enceinte pour l'élevage des animaux, par exemple des bovins.

Cette enceinte comporte un couloir de circulation qui comporte un axe longitudinal et qui est équipé d'un système de collecte pour la collecte des déjections s'écoulant au sein dudit couloir de circulation.

Le système de collecte comprend :
(i) un revêtement de sol, comprenant :
   - une surface supérieure d'appui sur laquelle les animaux sont destinés à prendre appui, et
   - au moins une rigole, parallèle audit axe longitudinal, qui comporte au moins une ouverture supérieure débouchant au travers de ladite surface supérieure d'appui pour recevoir lesdites déjections par écoulement,
(ii) des moyens pour la collecte des déjections circulant le long de ladite au moins une rigole, et
(iii) des moyens de convoyage pour convoyer les déjections au sein de ladite au moins une rigole, de manière à générer une circulation desdites déjections le long de ladite au moins une rigole et en direction desdits moyens de collecte.

Les moyens de convoyage comprennent un organe d'entrainement qui est associé à des moyens de manœuvre.

L'organe d'entrainement comporte deux parties superposées dans ladite au moins une rigole :
- une partie supérieure, apte à convoyer les déjections solides dans un premier sens de convoyage, tout en autorisant l'écoulement des déjections liquides, et
- une partie inférieure, apte à convoyer les déjections liquides s'écoulant depuis ladite partie supérieure, dans un second sens de convoyage qui est inverse audit premier sens.

Et, selon l'invention, la surface supérieure d'appui comprend au moins un couple de bandes latérales, s'étendant sur la largeur dudit couloir de circulation.

Dans ledit au moins un couple, lesdites bandes latérales (et de préférence les faces supérieures d'appui desdites bandes latérales) sont séparées par une rigole et présentent chacune une pente descendante vers ladite au moins une ouverture supérieure de ladite rigole.

La pente est orientée perpendiculairement audit axe longitudinal de sorte que ledit au moins un couple de bandes latérales (et de préférence les faces supérieures d'appui desdites bandes latérales) définit une face diédrique concave.

Un tel système permet d'améliorer l'évacuation automatique et continue des liquides (notamment des urines) depuis la surface supérieure d'appui, jusqu'auxdites rigoles.

La surface supérieure d'appui du revêtement de sol reste ainsi en permanence relativement peu humide, participant ainsi à améliorer les caractéristiques qualitatives du sol sur le plan de l'adhérence et de l'hygiène.

Cette structure permet également une séparation rapide et relativement efficace des urines par rapport aux fèces, pour limiter la production d'ammoniac au sein de l'enceinte d'élevage.

En effet, les urines vont tendre à être évacuées vers les rigoles, pour leur entrainement par les moyens de convoyage ; les fèces vont quant à elles tendre à rester sur la surface supérieure d'appui, pour leur évacuation par raclage mécanique (par exemple avec un rabot) ou par raclage aqueux (par exemple hydrocurage).

Un tel système selon l'invention est en plus adapté à être implanté de manière simple au sein d'une enceinte d'élevage nouvelle ou existante (amélioration ou rénovation), cela sans nécessiter la mise en œuvre de travaux de gros œuvre importants.

La surface supérieure d'appui moins humide permet aussi à l'onglon des bovins d'être plus dur, ce qui participe à la bonne santé du pied de ces animaux et qui contribue à diminuer les risques de glissades des animaux.

Dans cet environnement moins humide et moins productif en ammoniac, le niveau bactérien et les pics de prolifération sont maintenus bas, ce qui rend la lutte contre les maladies du pied beaucoup plus simple.

Un tel système de collecte est en plus particulièrement intéressant dans le cas d'un sol recouvert de paille.

En effet, la surface supérieure d'appui tend à maintenir les matières solides (notamment la paille et les fèces) ; ainsi, ces matières solides sont susceptibles d'être raclées pour le nettoyage de ladite surface supérieure d'appui. Les moyens de convoyage sont ainsi protégés efficacement au sein des rigoles, sans risque (ou tout au moins en réduisant les risques) d'interagir avec les matières solides de sorte à assurer un phénomène de circulation optimal pour les déjections dans les rigoles respectives.

Un tel système de collecte permet ainsi une collecte et une séparation particulièrement efficaces des déjections (solide / liquide), cela à partir d'une structure dont la mise en œuvre et la maintenance sont simplifiées.

D'autres caractéristiques non limitatives et avantageuses du produit conforme à l'invention, prises individuellement ou selon toutes les combinaisons techniquement possibles, sont les suivantes :
- le revêtement de sol comprend un unique couple de bandes latérales associé à une unique rigole positionnée avantageusement coaxialement audit axe longitudinal, ou deux couples de bandes latérales, dont les rigoles associées sont situées de part et d'autre dudit axe longitudinal ; de préférence, dans le cas de deux couples de bandes latérales, lesdits deux couples de bandes latérales sont juxtaposés et sont séparés l'un de l'autre par une rainure pour le guidage en translation d'un racleur ;
- chaque bande latérale présente une pente de 1 à 5%, de préférence de 2 à 4% ;
- chaque bande latérale présente une largeur allant de 500 à 2000 mm ;
- ladite au moins une rigole contient au moins un profilé de guidage rapporté, destiné à recevoir lesdites déjections et contenant l'organe d'entrainement, lequel au moins un profilé de guidage comporte au moins une ouverture supérieure agencée au niveau de ladite au moins une ouverture supérieure de ladite rigole associée, pour permettre l'écoulement des déjections dans ledit profilé de guidage ; de préférence, ledit au moins un profilé de guidage comporte une paroi intermédiaire, pour définir une chambre supérieure et une chambre inférieure dans lesquelles cheminent, respectivement, la partie supérieure et la partie inférieure dudit organe d'entraînement, laquelle paroi intermédiaire comporte au moins une ouverture traversante ; encore de préférence, ledit au moins un profilé de guidage est réalisé dans un matériau plastique ;
- ledit au moins un organe d'entrainement comprend une courroie dont les brins, avantageusement horizontaux, forment lesdites parties supérieure / inférieure, lesquels brins ont une largeur allant avantageusement de 40 à 100 mm.

Les bandes latérales possèdent avantageusement chacune une face supérieure d'appui réalisée dans un matériau apte à subir une déformation élastique.

Les bandes latérales sont avantageusement fabriquées chacune par un longeron à section triangulaire qui est rapporté directement sur le sol ou qui est surélevé par rapport au sol (par l'intermédiaire d'une seconde pièce).

De préférence, les bandes latérales sont définies chacune par un longeron à section triangulaire, rapporté sur une chape dans laquelle est ménagée ladite au moins une rigole ; de préférence encore, le longeron comprend une embase qui comporte une face supérieure inclinée sur laquelle est rapportée une couche sus-jacente réalisée dans ledit matériau apte à subir une déformation élastique, laquelle embase est avantageusement réalisée dans un matériau en béton, avantageusement coulée ou préfabriquée, ou dans un matériau plastique, de préférence moulé ou injecté.

De manière alternative, les bandes latérales sont avantageusement définies chacune par un longeron qui est rapporté sur un sol, par exemple un caillebotis, et entre lesquels est ménagée ladite au moins une rigole ; laquelle au moins une rigole est sus-jacente dudit sol.

Le longeron comprend alors avantageusement une embase qui comporte :
- une face supérieure inclinée sur laquelle est rapportée une couche sus-jacente réalisée dans ledit matériau apte à subir une déformation élastique, et
- une face inférieure prenant appui sur le sol,
laquelle embase est avantageusement réalisée dans un matériau plastique, de préférence moulé ou injecté.

De préférence encore, l'embase comprend deux pièces superposées :
- une première pièce à section triangulaire, formant la face supérieure inclinée sur laquelle est rapportée une couche sus-jacente, et
- une seconde pièce à section rectangulaire, formant la face inférieure prenant appui sur le sol et recevant ladite première pièce à section triangulaire.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue en coupe et partielle d'une enceinte pour l'élevage des animaux, montrant son couloir de circulation qui est équipé d'un système de collecte selon l'invention ;
[Fig. 2] est une vue partiel et agrandie de la figure 1, montrant plus en détails un couple de bandes latérales associées à une rigole ;
[Fig. 3] est une vue schématique d'une rigole appartenant au système de collecte, selon un plan de coupe orienté verticalement et longitudinalement le long d'une rigole ;
[Fig. 4] est encore une vue schématique et agrandie de la rigole selon la figure 3, avec un plan de coupe orienté maintenant transversalement (perpendiculairement à son axe longitudinal) ;
[Fig. 5] est aussi une vue schématique de la rigole selon la figure 3, avec un plan de coupe orienté transversalement et dont l'organe d'entrainement est représenté schématiquement en traits discontinus ;
[Fig. 6] est aussi une vue schématique de la rigole selon la figure 3, avec un plan de coupe orienté transversalement, montrant une variante de réalisation pour le profilé de guidage ;
[Fig. 7] représente schématiquement, en perspective et de manière isolée, le profilé de guidage selon la figure 6 dans lequel est rapporté l'organe d'entrainement ;
[Fig. 8] est encore une vue schématique et partiel d'un système de collecte rapporté sur un sol, avantageusement un caillebotis.

Il est à noter que, sur ces figures, les éléments structurels et/ou fonctionnels communs aux différentes variantes peuvent présenter les mêmes références.

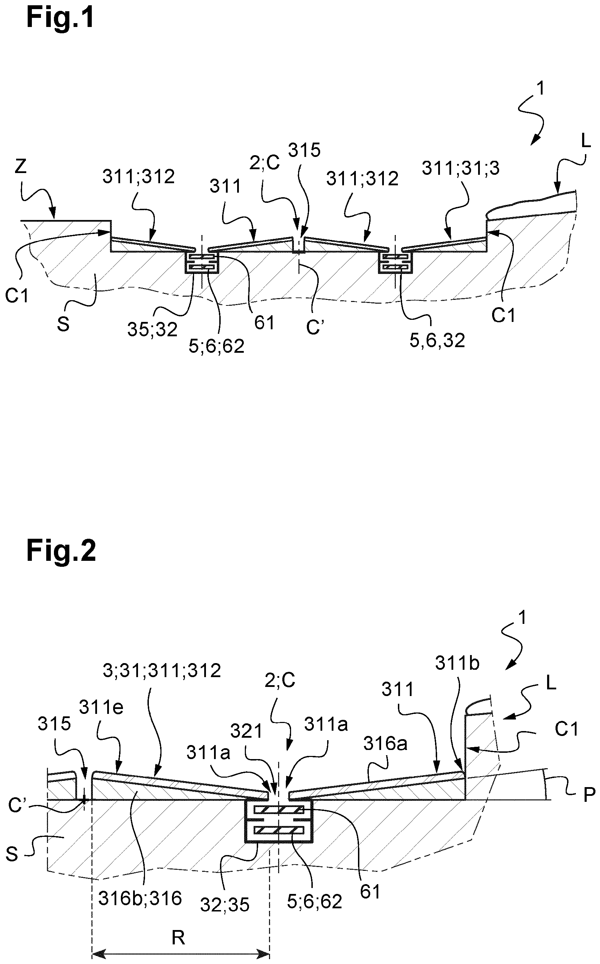

L'enceinte 1 selon l'invention, telle que représenté schématique et partiellement sur la figure 1, est adaptée à l'élevage des animaux, par exemple des bovins.

Par « animaux », on entend notamment les bovins (en particulier les vaches laitières ou les bovins à viande), les porcins, ou encore tout autre animal d'élevage (ovin, volaille, lapin, cheval, etc.).

Une telle enceinte 1 consiste en un bâtiment délimité par un bâti (non représenté), adapté à l'élevage souhaité (par exemple une étable dans le cas de bovins).

Une telle enceinte 1 comporte un couloir de circulation C qui présente un axe longitudinal C' (voir figures 1 et 2). L'axe longitudinal C' forme avantageusement une ligne centrale longitudinale du couloir de circulation C.

Ce couloir de circulation C est avantageusement bordé par deux bordures latérales C1.

Un tel couloir de circulation C est emprunté par les animaux cheminant entre les différents espaces fonctionnels de l'enceinte d'élevage, par exemple les logettes L (à droite sur la figure 1), les plateformes d'alimentation Z situées éventuellement devant les cornadis (à gauche sur la figure 1), les salles de traite, etc.

Selon l'invention, le couloir de circulation C est équipé d'un système de collecte 2 qui est adapté à la collecte des déjections s'écoulant au sein de ce couloir de circulation C.

Tel que développé ci-après, un tel système de collecte 2 a pour intérêt de collecter les déjections (en particulier les liquides) s'écoulant sur le sol et de les évacuer, de sorte à offrir une surface supérieure d'appui relativement sèche (ou au moins ne présentant pas une humidité excessive) pour les pieds des animaux, et donc plus saine et plus sécurisante.

Un tel système de collecte 2 est en outre avantageusement apte à récupérer les déjections liquides s'écoulant sur le sol et à les séparer par rapport aux matières solides (par exemple les fèces, la paille, etc.), en continu et par gravité.

Pour cela, le système de collecte 2 comprend :
(i) un revêtement de sol 3, comprenant :
   - une surface supérieure d'appui 31 sur laquelle les animaux sont destinés à prendre appui, et
   - au moins une rigole 32 (avantageusement une rigole ou deux rigoles), parallèle à l'axe longitudinal C' précité, comportant au moins une ouverture supérieure 321 pour recevoir les déjections par écoulement,
(ii) des moyens de collecte 4 pour la collecte des déjections circulant le long de ladite au moins une rigole 32, et
(iii) des moyens de convoyage 5 pour convoyer les déjections au sein de ladite au moins une rigole 32, de manière à générer une circulation desdites déjections le long de ladite au moins une rigole 32 et en direction des moyens de collecte 4.

### Revêtement de sol

Pour assurer l'écoulement des déjections vers ladite au moins une rigole 32, la surface supérieure d'appui 31 du revêtement de sol comprend au moins un couple de bandes latérales 311 « inclinées » dans lequel les deux bandes latérales 311 d'un couple sont séparées par une rigole 32 précitée.

Un tel couple de bandes latérales 311, dit encore « couple », est désigné par le repère 312.

Les bandes latérales 311 s'étendent ainsi de part et d'autre de la rigole 32. En d'autres termes, la rigole 32 est intercalée entre les deux bandes latérales 311 d'un couple 312.

Chaque bande latérale 311 présente encore une pente descendante vers ladite au moins une ouverture supérieure 321 de la rigole 32 associée.

La pente est orientée perpendiculairement par rapport à l'axe longitudinal C' de sorte que le couple 312 de bandes latérales 311 définit une face diédrique concave dont la droite d'intersection serait parallèle à l'axe longitudinal C'.

En d'autres termes, la surface supérieure d'appui 31 présente avantageusement au moins une face diédrique concave dont la droite d'intersection est parallèle à l'axe longitudinal C'.

Encore en d'autres termes, la face supérieure d'appui 311e de chaque bande latérale 311 présente encore une pente descendante vers ladite au moins une ouverture supérieure 321 de la rigole 32 associée.

En d'autres termes, chaque bande latérale 311 comporte deux extrémités, définissant sa largeur R et parallèles à l'axe longitudinal C', à savoir :
- une extrémité inférieure 311a, située à proximité de la rigole 32, et
- une extrémité supérieure 311b, située à distance de la rigole 32.

L'extrémité supérieure 311b d'une bande latérale 311 est avantageusement attenante d'une bordure latérale C1 du couloir C.

La bande latérale 311 est ainsi en pente descendante depuis l'extrémité supérieure 311b jusqu'à l'extrémité inférieure 311a.

En outre, les extrémités inférieures 311a des deux bandes latérales 311 d'un couple 312 sont avantageusement séparées d'une largeur D qui est égale, ou inférieure, à la largeur A de l'ouverture supérieure 321 de la rigole 32 (mesurée avantageusement perpendiculairement à l'axe longitudinal C' et entre deux bordures latérales de ladite ouverture supérieure 321).

En d'autres termes, lorsque les largeurs D et A sont égales, les extrémités inférieures 311a des deux bandes latérales 311 d'un couple 312 affleurent l'ouverture supérieure 321 de la rigole 32.

Et lorsque la largeur D est inférieure à la largeur A, les extrémités inférieures 311a des deux bandes latérales 311 d'un couple 312 s'étendent en porte-à-faux (ou en saillie) par rapport à l'ouverture supérieure 321 de la rigole 32 (et avantageusement en regard d'une paroi de fond 323 de la rigole 32).

Par exemple, la largeur A de l'ouverture supérieure 321 de la rigole 32 (correspondant encore à la largeur de la rigole 32 et à la distance séparant ses parois latérales 322) est de 50 à 150 mm. De préférence, les extrémités inférieures 311a des deux bandes latérales 311 d'un couple 312 sont avantageusement séparées d'une largeur D allant de 10 à 40 mm, avec de préférence de 30 à 40 mm pour les bovins et de 10 à 20 mm pour les porcins.

Par ailleurs, chaque bande latérale 311 présente encore une pente P qui est avantageusement de 1 à 5%, de préférence de 2 à 4%.

De préférence encore, les bandes latérales 311 possèdent chacune une face supérieure d'appui 311e réalisée dans un matériau apte à subir une déformation élastique.

Une telle face supérieure d'appui 311e est alors avantageusement réalisée dans un matériau choisi parmi :
- les matériaux élastomères, à savoir par exemple le caoutchouc naturel, le caoutchouc « naturel synthétique » (ou polyisoprène synthétique), le polybutadiène ou le styrène - butadiène, ou
- les matériaux plastiques ou élastomères thermoplastiques (TPE), à savoir par exemple le PVB (Polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

La face supérieure d'appui 311e est avantageusement plane, éventuellement munie d'un relief antidérapant.

Le relief antidérapant consiste par exemple en un relief monobloc choisi parmi les reliefs utilisés dans les revêtements de sols mis en œuvre de manière classique dans les bâtiments d'élevage, par exemple des éléments saillants en forme de losanges munis de bossages.

Selon un mode de réalisation illustré en relation avec les figures 1 à 5, les bandes latérales 311 sont avantageusement fabriquées chacune par un longeron 316 à section triangulaire, qui sont rapportés sur une chape S (avantageusement horizontale).

La chape S est avantageusement réalisée en bitume ou en béton.

Ladite au moins une rigole 32 se présente avantageusement sous la forme d'une rainure réalisée à la surface de cette chape S (éventuellement par une opération de rainurage).

Chaque longeron 316 comporte avantageusement deux surfaces opposées :
- une surface supérieure 3161, correspondant à la face supérieure d'appui 311e, et
- une surface inférieure 3162, destinée à reposer sur la chape S.

Ces surfaces opposées 3161, 3162 sont convergentes depuis l'extrémité supérieure 311b vers l'extrémité inférieure 311a.

De manière générale et de préférence, lorsque la largeur D est inférieure à la largeur A, la surface inférieure 3162 des longerons 316 vient en regard de la paroi de fond 323.

Chaque longeron 316 peut être composé de plusieurs couches superposées, à savoir par exemple une embase 316b qui comporte une face supérieure inclinée 316b1 sur laquelle est rapportée une couche sus-jacente 316a réalisée dans le matériau apte à subir une déformation élastique.

L'embase 316b définit alors avantageusement la pente de la face supérieure d'appui 311e. Et la couche sus-jacente 316a forme la face supérieure d'appui 311e.

Là encore, l'embase 316b possède deux surfaces opposées, l'une supérieure et l'autre inférieure, convergentes depuis l'extrémité supérieure 311b vers l'extrémité inférieure 311a.

L'embase 316b est avantageusement réalisée dans un matériau choisi parmi :
- un matériau en béton, avantageusement coulée ou préfabriquée, ou
- un matériau plastique, de préférence moulé ou injecté.

L'embase 316b est avantageusement constituée par une succession de pièces identiques, agencées en série et attenantes longitudinalement.

La couche sus-jacente 316a possède avantageusement une épaisseur constante, par exemple allant de 8 à 30 mm.

Cette couche sus-jacente 316a est avantageusement continue (par exemple sous la forme d'une feuille continue ou d'un tapis continu), et rapportée sur l'embase 316b. La couche sus-jacente 316a peut encore est discontinue, formée par une juxtaposition de plaques.

Cette couche sus-jacente 316a comporte éventuellement une sous-couche de renfort ou est dépourvue de sous-couche de renfort.

La liaison entre l'embase 316b et la couche sus-jacente 316a est avantageusement réalisée par des pièces mécaniques d'assemblage, traversant le longeron 316 jusqu'à la chape S.

De manière alternative, non représentée, la chape S et les embases 316b sont monoblocs, avantageusement formées par des blocs préfabriqués (par exemple réalisés dans des blocs en béton). Les couches sus-jacentes 316a sont rapportées sur les faces supérieures inclinées 316b1 des parties formant embases 316b.

De manière alternative, non représentée, les logerons 316 sont formés par des pièces monoblocs, réalisés dans ledit matériau apte à subir une déformation élastique.

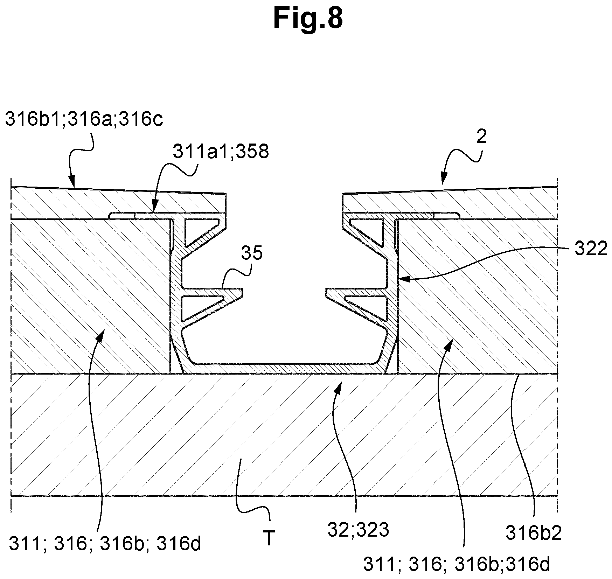

Encore de manière alternative, tel que représenté schématiquement sur la figure 8, le système de collecte 2 est rapporté sur un sol T, par exemple sur un caillebotis T (structure ajourée réalisée par exemple en métal ou en béton).

Ladite au moins une rigole 32 se présente avantageusement sous la forme d'une rainure sus-jacente de la surface du sol T (et le cas échéant de la surface du caillebotis T).

Les bandes latérales 311 sont définies chacune par un longeron 316 qui est rapporté sur ledit caillebotis T et entre lesquels est ménagée ladite au moins une rigole 32.

Pour cela, le longeron 316 comprend une embase 316b qui comporte :
- une face supérieure inclinée 316b1, sur laquelle est rapportée une couche sus-jacente 316a réalisée dans ledit matériau apte à subir une déformation élastique, et
- une face inférieure 316b2 prenant appui sur le sol (ici le caillebotis T).

Là encore, l'embase 316b est avantageusement réalisée dans un matériau plastique, de préférence moulé ou injecté.

L'embase 316b comprend de préférence deux pièces superposées :
- une première pièce 316c, supérieure, à section triangulaire, formant la face supérieure inclinée 316b1 sur laquelle est rapportée une couche sus-jacente 316a (identique au longeron décrit ci-dessus en relation avec les figures 1 à 5), et
- une seconde pièce 316d, inférieure, à section rectangulaire (en forme de bloc parallélépipédique), formant la face inférieure 316b2 prenant appui sur le sol T et recevant ladite première pièce 316c à section triangulaire.

Les embases 316b en regard, et en particulier les secondes pièces 316d, définissent les parois latérales 322 d'une rigole 32 ; la paroi de fond 323 de cette rigole 32 est formée par le sol T (le cas échéant le caillebotis T).

Le cas échéant, le profilé de guidage 35 est rapporté dans le rigole 32, sus-jacent de la paroi de fond 323 de cette rigole 32, entre les embases 316b.

En d'autres termes, de manière générale, les bandes latérales 311 sont avantageusement fabriquées chacune par un longeron à section triangulaire 316, 316c qui est rapporté directement sur le sol ou qui est surélevé par rapport au sol (par l'intermédiaire d'une seconde pièce 316d).

Encore par ailleurs, chaque bande latérale 311 présente avantageusement une largeur R allant de 500 à 2000 mm.

Toujours par ailleurs, le ou les couples 312 de bandes latérales 311 s'étendent sur la largeur du couloir de circulation C. En d'autres termes, la surface supérieure d'appui 31 est avantageusement constituée par au moins un couple 312 de bandes latérales 311 (avantageusement un couple 312 ou deux couples 312 juxtaposés).

En l'espèce, la surface supérieure d'appui 31 comprend ici deux couples 312 de bandes latérales 311, qui sont juxtaposés latéralement et qui s'étendent ensemble sur la largeur du couloir C.

Les deux couples 312 de bandes latérales 311, et les deux rigoles 32 associées, sont avantageusement identiques.

Les couples 312 de bandes latérales 311, et les rigoles 32 associées, se situent avantageusement de part et d'autre de l'axe longitudinal C'.

L'extrémité supérieure 311b d'une bande latérale 311 est attenante d'une bordure latérale C1 du couloir de circulation C.

Ces deux couples 312 de bandes latérales 311 sont ici séparés l'un de l'autre par une rainure 315 pour assister le guidage en translation d'un racleur.

De manière alternative, non représentée, la surface supérieure d'appui 31 comprend un unique couple 312 de bandes latérales 311.

Cet unique couple 312 s'étend sur la largeur du couloir C.

Cet unique couple 312 est associé à une unique rigole 32, positionnée avantageusement dans le plan vertical passant par l'axe longitudinal C'.

L'extrémité supérieure 311b de chacun des deux bandes latérales 311 est attenante d'une bordure latérale C1 du couloir de circulation C.

De manière générale, une rigole 32 comporte au moins une ouverture supérieure 321 qui débouche au travers de la surface supérieure d'appui 31 (entre deux bandes latérales 311) pour recevoir les déjections par écoulement (autrement dit «par gravité »).

La rigole 32 comporte avantageusement une ouverture supérieure 321 continue et longitudinale, s'étendant sur la longueur du couloir C.

La rigole 32 comporte encore une section transversale en forme générale de U, définie par deux parois latérales 322 et une paroi de fond 323.

Les parois latérales 322, avantageusement verticales, définissent latéralement l'ouverture supérieure 321.

Cette rigole 32 est avantageusement débouchante au niveau de deux extrémités longitudinales, terminées au niveau des moyens de collecte 4.

### Moyens de convoyage

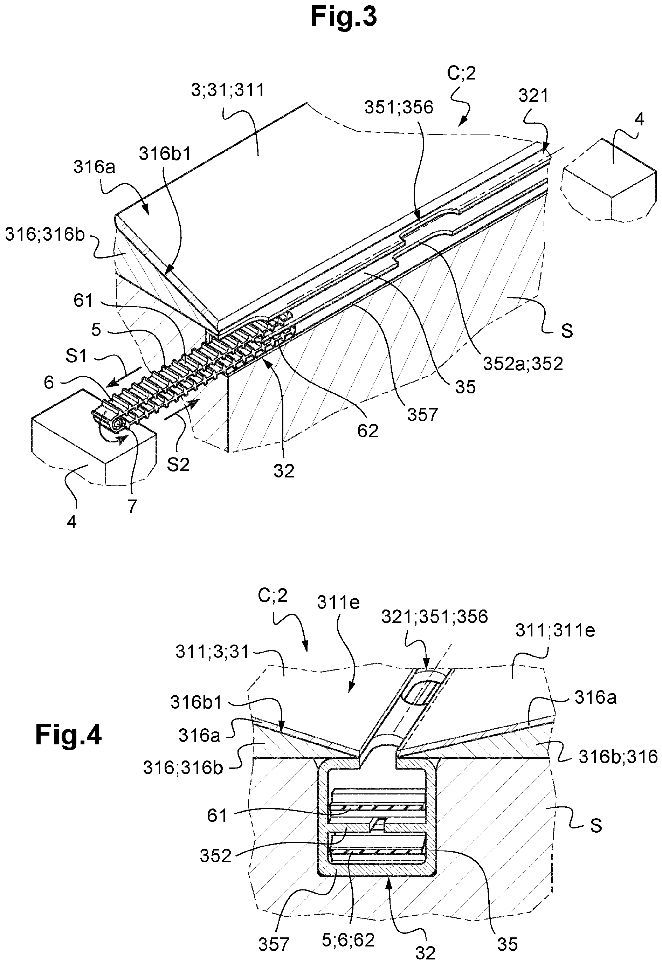

Les moyens de convoyage 5 comprennent un organe d'entrainement 6 qui est associé à des moyens de manœuvre 7 (voir en particulier figure 3).

L'organe d'entrainement 6 comporte deux parties 61, 62 superposées dans la rigole 32 :
- une partie supérieure 61, apte à convoyer les déjections solides dans un premier sens de convoyage S1, tout en autorisant l'écoulement des déjections liquides, et
- une partie inférieure 62, apte à convoyer les déjections liquides s'écoulant depuis la partie supérieure 61 précitée, dans un second sens de convoyage S2 qui est inverse au premier sens de convoyage S1.

Une telle forme de réalisation vise à favoriser une évacuation, d'une part, des déjections solides au niveau d'une première extrémité de la rigole 32 et, d'autre part, des déjections liquides au niveau d'une seconde extrémité de cette même rigole 32.

Pour cela, l'organe d'entrainement 6 comprend avantageusement une courroie (ou sangle ou bande) agencée pour définir deux brins superposés dans la rigole 32 :
- un brin supérieur, cheminant dans un premier sens S1, formant la partie supérieure 61 de l'organe d'entrainement 6, et
- un brin inférieur, cheminant dans un second sens S2, formant la partie inférieure 62 de l'organe d'entrainement 6.

Les brins 61, 62 de cet organe d'entrainement 6 sont avantageusement orientés chacun horizontalement. Ces deux brins 61, 62 s'étendent ainsi avantageusement dans deux plans parallèles et superposés.

Chaque brin 61, 62 a une largeur G allant avantageusement de 40 à 100 mm.

Une telle largeur est intéressante sur le plan de la résistance et de l'assemblage (par exemple par agrafage).

De préférence, l'organe d'entrainement 6 est réalisé monobloc, dans un matériau élastomère, à savoir par exemple le caoutchouc naturel, le caoutchouc « naturel synthétique » (ou polyisoprène synthétique), le polybutadiène ou le styrène - butadiène.

Pour limiter les frottements et optimiser le guidage des déjections, la rigole 32 contient au moins un profilé de guidage 35 rapporté, destiné à recevoir les déjections et contenant l'organe d'entrainement 6 des moyens de convoyage 5 (voir notamment sur les figures 3 à 5).

Ledit au moins un profilé de guidage 35 est avantageusement réalisé dans un matériau plastique.

Ledit au moins un profilé de guidage 35 comporte au moins une ouverture supérieure 351, débouchant au niveau de ladite au moins une ouverture supérieure 321 de la rigole 32 associée, pour permettre l'écoulement des déjections au sein de ce profilé de guidage 35.

Dans ce cas, les extrémités inférieures 311a des bandes latérales 311 d'un couple 312 sont avantageusement séparées d'une largeur D qui est égale, ou inférieure, à la largeur B de ladite au moins une ouverture supérieure 351 (avantageusement délimitée par deux bordures latérales parallèles à l'axe longitudinal C').

En d'autres termes, lorsque les largeurs D et B sont égales, les extrémités inférieures 311a des deux bandes latérales 311 d'un couple 312 affleurent l'ouverture supérieure 351 du profilé de guidage 35. Et lorsque la largeur D est inférieure à la largeur B, les extrémités inférieures 311a des deux bandes latérales 311 d'un couple 312 s'étendent en porte-à-faux (ou en saillie) par rapport à l'ouverture supérieure 351 du profilé de guidage 35.

Ledit au moins un profilé de guidage 35 comporte ici une paroi intermédiaire 352, pour définir une chambre supérieure 353 et une chambre inférieure 354 dans lesquelles cheminent, respectivement, la partie supérieure 61 et la partie inférieure 62 de l'organe d'entraînement 6 associé.

Cette paroi intermédiaire 352 comporte encore au moins une ouverture traversante 352a pour autoriser l'écoulement des liquides depuis la chambre supérieure 353 vers la chambre inférieure 354.

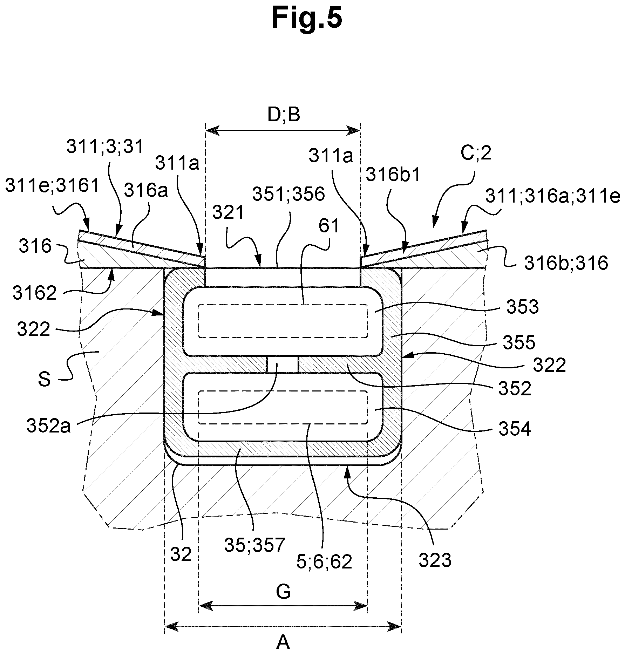

Plus précisément, tel que décrit en relation avec la figure 5, le profilé de guidage 35 comporte avantageusement une ceinture de parois définissant une section rectangulaire :
- deux parois latérales 355, verticales,
- une paroi supérieure 356, horizontale, munie de ladite au moins une ouverture supérieure 351, et
- une paroi inférieure 357, horizontale.

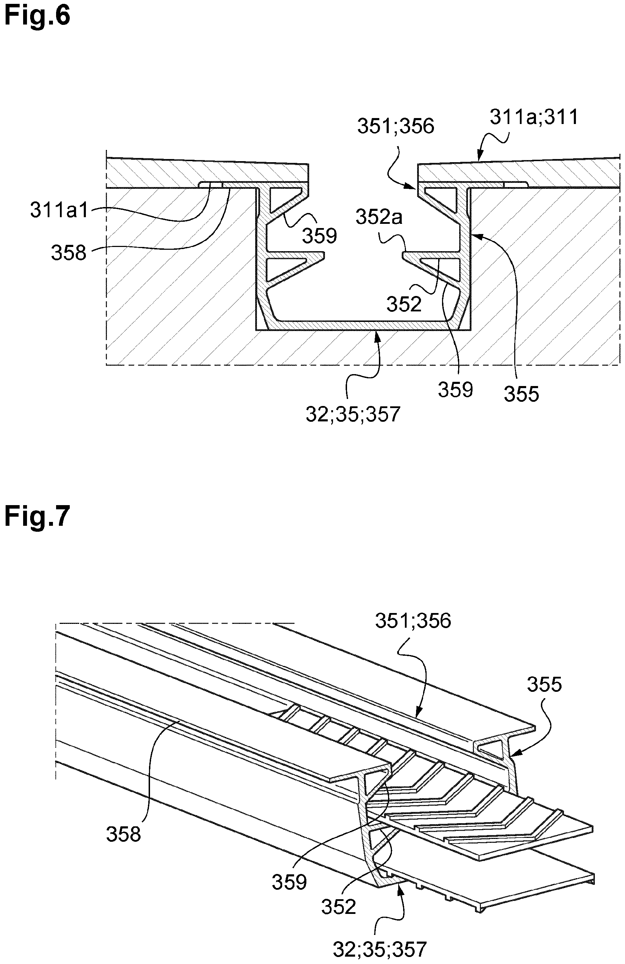

Tel que représenté schématiquement sur les figures 6 à 8, la paroi intermédiaire 352 et la paroi supérieure 356 sont avantageusement renforcées par une paroi sous-jacente 359, formant une sorte de jambe de force.

Cette paroi sous-jacente 359 s'étend, de manière inclinée, entre, d'une part, la face inférieure de la paroi intermédiaire 352 / paroi supérieure 356 et, d'autre part, la paroi latérale 355 attenante.

Selon une variante de réalisation illustrée sur les figures 6 à 8, le profilé de guidage 35 comporte encore avantageusement deux parois saillants 358, prolongeant les parois latérales 355 vers l'extérieur (à l'opposé de l'ouverture supérieure 351).

Les parois saillantes 358 s'étendant en porte-à-faux par rapport aux parois latérales 355, ici dans le prolongement de la paroi supérieure 356.

Ces parois saillantes 358 forment avantageusement une cornière avec les parois latérales 355.

La paroi saillante 358 et la paroi supérieure 356, prolongeant une paroi latérale 355, définissent avantageusement une section en Té.

Chaque paroi saillante 358, et la paroi supérieure 356 associée, est avantageusement recouverte par une extrémité inférieure 311a d'une bande latérale 311, située à proximité de la rigole 32.

Cette extrémité inférieure 311a comporte avantageusement une réservation inférieure 311a1 pour le positionnement de la paroi saillante 358 précitée.

En pratique, les parois saillantes 358 viennent prendre appui de part et d'autre de la rigole 32 :
- sur la chape S, tel qu'illustré sur la figure 6, ou
- sur la face supérieure des secondes pièces 316d attenantes, tel qu'illustré sur la figure 8.

Les parois saillantes 358 sont ainsi prises en sandwich entre une face sous-jacente (par exemple la chape S ou une seconde pièce 316d) et un longeron 316, 316c sus-jacent à section triangulaire.

Une telle forme de réalisation participe avantageusement en une étanchéité optimale du revêtement de sol 2.

De plus, le profilé de guidage 35 est avantageusement suspendu par ses parois saillantes 358 dans la rigole 32 (pour un positionnement optimal du profilé de guidage 35 dans sa rigole 32).

La paroi inférieure 357 du profilé de guidage 35 s'étend avantageusement à distance de la paroi de fond 323 de la rigole 32 (la hauteur de la rigole 32 est avantageusement supérieure à la hauteur du profilé de guidage 35).

De manière générale et de préférence, lorsque la largeur D est inférieure à la largeur B, la surface inférieure 3162 des longerons 316 vient en regard de la paroi de fond 323 et, le cas échéant, recouvre une partie de la paroi supérieure 356 du profilé de guidage 35.

Par ailleurs, la paroi intermédiaire 352 s'étend alors entre les parois latérales 355, à distance des parois supérieure 356 / inférieure 357.

La section rectangulaire du profilé de guidage 35 est avantageusement identique, au jeu près, à la section en U de la rigole 32 associée.

Encore de manière générale, ledit au moins un profilé de guidage 35 est avantageusement continu sur toute la longueur de la rigole 32.

Ledit au moins un profilé de guidage 35 comporte par ailleurs avantageusement deux extrémités débouchantes, situées au niveau des moyens de collecte 4 et des extrémités débouchantes de la rigole 32.

Les moyens de manœuvre 7 sont situés au niveau de ces extrémités débouchantes de la rigole 32 et du profilé de guidage 35.

Ces moyens de manœuvre 7 consistent par exemple en deux poulies à axes horizontaux, dont l'une au moins est motorisée.

### Moyens de collecte

Les moyens de collecte 4 comprennent en particulier une fosse ou un canal de reprise (représentés très schématiquement sur la figure 3).

Ces moyens de collecte 4 sont installés au niveau de l'une au moins des deux extrémités ouvertes de ladite au moins une rigole 32.

### Moyens de raclage

De préférence, cette installation de collecte 2 comporte encore des moyens pour le raclage de la surface supérieure d'appui 31.

Ces moyens de raclage consistent par exemple en un rabot dont la bordure inférieure repose sur la surface supérieure d'appui 31.

Ce rabot est destiné à être manœuvré en translation sur la longueur du revêtement de sol 3 pour repousser les matières solides (fèces, paille, etc.) présentes sur la surface supérieure d'appui 31, jusqu'aux moyens de collecte 4.

Ces moyens de raclage peuvent être choisis parmi les moyens classiques en soi et connus de l'homme du métier.

### Installation et mise en œuvre

L'installation du système de collecte 2 selon l'invention commence avantageusement par la mise en place des moyens de convoyage 5 dans ladite au moins une rigole 32 présente dans le couloir de circulation C.

Cette mise en place est poursuivie par l'installation de la surface supérieure d'appui 31 le long du couloir de circulation C.

Le cas échéant, les longerons 316 sont rapportés et fixés sur la chape S pour former les bandes latérales 311 de la surface supérieure d'appui 31.

En fonctionnement, la surface supérieure d'appui 31 est susceptible de recevoir différentes matières organiques, notamment des déjections (urine, fèces).

Les bandes latérales 311 permettent alors un écoulement des déjections jusqu'à ladite au moins une rigole 32, évitant ainsi l'accumulation de ces liquides sur la surface supérieure d'appui 31 qui reste ainsi relativement sèche.

Les matières solides, notamment les fèces et la paille, tendent à demeurer sur la surface supérieure d'appui 31, de sorte à éviter ou au moins limiter leurs mélanges avec les matières liquides pour limiter la production d'ammoniac au sein de l'enceinte d'élevage et aussi de sorte à éviter que des matières solides viennent s'accrocher avec les moyens de convoyage 5 pour conserver une action optimale sur la mise en circulation des déjections au sein des rigoles 32.

Lors d'un nettoyage de ce revêtement de sol 3, le liquide de nettoyage va également s'écouler dans ladite au moins une rigole 32, évitant que la surface supérieure d'appui 31 reste mouillée de manière excessive.

Ce phénomène permet par conséquent aux animaux de cheminer sur une surface relativement saine, avec un risque de chute réduit et sans humidification de leurs pieds.

De manière avantageuse, les liquides sont concentrés dans une ou deux rigoles 32 ce qui a pour intérêt de concentrer les liquides mais aussi de simplifier l'installation et la maintenance.

Plus généralement, l'ensemble des déjections s'écoulant dans ladite au moins une rigole 32 est alors efficacement évacué vers les moyens de collecte 4 (notamment la fosse ou le canal de reprise) par la mise en œuvre des moyens de convoyage 5 décrits ci-dessus.

Le cas échéant, les organes d'entrainement 6 sont mis en mouvement au sein des profilés de guidage 35 (de manière continue ou discontinue), de sorte à générer le cheminement (continu ou discontinu) des déjections vers les moyens de collecte 4 dédiés.

Les profilés de guidage 35 ont l'intérêt de canaliser efficacement ces déjections et de réduire les efforts de frottement exercés sur les moyens de convoyage 5.

Les moyens de convoyage 5 permettent ainsi une circulation et une évacuation active des déjections contenues dans les rigoles 32, pour éviter leur stagnation et pour limiter le développement d'ammoniac et de microorganismes dans l'enceinte d'élevage.

Encore de manière générale, le système de collecte 2 selon l'invention permet une évacuation rapide et en continu des déjections par rapport à la surface supérieure d'appui 31 et par rapport à l'enceinte d'élevage, ce qui permet un maintien efficace de cette dernière à l'état sec (ou au moins sans excès d'humidité), limitant ainsi les problèmes d'hygiène rencontrés avec les revêtements de sol habituels.

Le système de collecte 2 selon l'invention permet également une certaine séparation des liquides qui s'écoulent dans les rigoles 32, par rapport aux fèces et à la paille qui restent principalement sur la surface supérieure d'appui 31, de sorte à éviter leur mélange et à limiter la production d'ammoniac au sein de l'enceinte d'élevage.

## Revendications

1. Enceinte pour l'élevage des animaux, par exemple des bovins, laquelle enceinte (1) comporte un couloir de circulation (C) qui comporte un axe longitudinal (C') et qui est équipé d'un système de collecte (2) pour la collecte des déjections s'écoulant au sein dudit couloir de circulation (C),
lequel système de collecte (2) comprend :
(i) un revêtement de sol (3), comprenant :
- une surface supérieure d'appui (31) sur laquelle les animaux sont destinés à prendre appui, et
- au moins une rigole (32), parallèle audit axe longitudinal (C'), qui comporte au moins une ouverture supérieure (321) débouchant au travers de ladite surface supérieure d'appui (31) pour recevoir lesdites déjections par écoulement,
(ii) des moyens de collecte (4) pour la collecte des déjections circulant le long de ladite au moins une rigole (32), et
(iii) des moyens de convoyage (5) pour convoyer les déjections au sein de ladite au moins une rigole (32), de manière à générer une circulation desdites déjections le long de ladite au moins une rigole (32) et en direction desdits moyens de collecte (4),
lesquels moyens de convoyage (5) comprennent un organe d'entrainement (6) qui est associé à des moyens de manœuvre,
lequel organe d'entrainement (6) comporte deux parties superposées dans ladite au moins une rigole (32) :
- une partie supérieure (61), apte à convoyer les déjections solides dans un premier sens de convoyage, tout en autorisant l'écoulement des déjections liquides, et
- une partie inférieure (62), apte à convoyer les déjections liquides s'écoulant depuis ladite partie supérieure (61), dans un second sens de convoyage qui est inverse audit premier sens,
**caractérisée en ce que** ladite surface supérieure d'appui (31) comprend au moins un couple (312) de bandes latérales (311), s'étendant sur la largeur dudit couloir de circulation (C),
et **en ce que**, dans ledit au moins un couple (312), lesdites bandes latérales (311) sont séparées par une rigole (32) et présentent chacune une pente descendante vers ladite au moins une ouverture supérieure (321) de ladite rigole (32),
ladite pente étant orientée perpendiculairement audit axe longitudinal (C') de sorte que ledit au moins un couple (312) de bandes latérales (311) définit une face diédrique concave.

2. Enceinte pour l'élevage des animaux, selon la revendication 1, **caractérisée en ce que** le revêtement de sol (3) comprend :
- un unique couple (312) de bandes latérales (311) associé à une unique rigole (32) positionnée avantageusement coaxialement audit axe longitudinal (C'), ou
- deux couples (312) de bandes latérales (311), dont les rigoles (32) associées sont situées de part et d'autre dudit axe longitudinal (C').

3. Enceinte pour l'élevage des animaux, selon la revendication 2, **caractérisée en ce que**, dans le cas de deux couples (312) de bandes latérales (311), lesdits deux couples (312) de bandes latérales (311) sont juxtaposés et sont séparés l'un de l'autre par une rainure (315) pour le guidage en translation d'un racleur.

4. Enceinte pour l'élevage des animaux, selon l'une quelconque des revendications 1 à 3, **caractérisée en ce que** chaque bande latérale (311) présente une pente de 1 à 5%, de préférence de 2 à 4%.

5. Enceinte pour l'élevage des animaux, selon l'une quelconque des revendications 1 à 4, **caractérisée en ce que** chaque bande latérale (311) présente une largeur allant de 500 à 2000 mm.

6. Enceinte pour l'élevage des animaux, selon l'une quelconque des revendications 1 à 5, **caractérisée en ce que** ladite au moins une rigole (32) contient au moins un profilé de guidage (35) rapporté, destiné à recevoir lesdites déjections et contenant l'organe d'entrainement (6),
lequel au moins un profilé de guidage (35) comporte au moins une ouverture supérieure (351) agencée au niveau de ladite au moins une ouverture supérieure (321) de ladite rigole (32) associée, pour permettre l'écoulement des déjections dans ledit profilé de guidage (35).

7. Enceinte pour l'élevage des animaux, selon la revendication 6, **caractérisée en ce que** ledit au moins un profilé de guidage (35) comporte une paroi intermédiaire (352), pour définir une chambre supérieure (353) et une chambre inférieure (354) dans lesquelles cheminent, respectivement, la partie supérieure (61) et la partie inférieure (62) dudit organe d'entrainement (6),
laquelle paroi intermédiaire (352) comporte au moins une ouverture traversante (352a).

8. Enceinte pour l'élevage des animaux, selon l'une quelconque des revendications 6 ou 7, **caractérisée en ce que** ledit au moins un profilé de guidage (35) est réalisé dans un matériau plastique.

9. Enceinte pour l'élevage des animaux, selon l'une quelconque des revendications 1 à 8, **caractérisée en ce que** ledit au moins un organe d'entrainement (6) comprend une courroie dont les brins, avantageusement horizontaux, forment lesdites parties supérieure (61) / inférieure (62),
lesquels brins (61, 62) ont une largeur allant avantageusement de 40 à 100 mm.

10. Enceinte pour l'élevage des animaux, selon l'une quelconque des revendications 1 à 9, **caractérisée en ce que** les bandes latérales (311) possèdent chacune une face supérieure d'appui (311e) réalisée dans un matériau apte à subir une déformation élastique.

11. Enceinte pour l'élevage des animaux, selon la revendication 10, **caractérisée en ce que** les bandes latérales (311) sont définies chacune par un longeron (316) à section triangulaire, rapporté sur une chape (S) dans laquelle est ménagée ladite au moins une rigole (32).

12. Enceinte pour l'élevage des animaux, selon la revendication 11, **caractérisée en ce que** le longeron (316) comprend une embase (316b) qui comporte une face supérieure inclinée (316b1) sur laquelle est rapportée une couche sus-jacente (316a) réalisée dans ledit matériau apte à subir une déformation élastique,
laquelle embase (316b) est avantageusement réalisée dans un matériau en béton, avantageusement coulée ou préfabriquée, ou dans un matériau plastique, de préférence moulé ou injecté.

13. Enceinte pour l'élevage des animaux, selon la revendication 10, **caractérisée en ce que** les bandes latérales (311) sont définies chacune par un longeron (316) qui est rapporté sur un sol (T), par exemple un caillebotis (T), et entre lesquels est ménagée ladite au moins une rigole (32), laquelle au moins une rigole (32) est sus-jacente dudit sol (T).

14. Enceinte pour l'élevage des animaux, selon la revendication 13, **caractérisée en ce que** le longeron (316) comprend une embase (316b) qui comporte :
- une face supérieure inclinée (316b1) sur laquelle est rapportée une couche sus-jacente (316a) réalisée dans ledit matériau apte à subir une déformation élastique, et
- une face inférieure (316b2) prenant appui sur le sol,
laquelle embase (316b) est avantageusement réalisée dans un matériau plastique, de préférence moulé ou injecté.

15. Enceinte pour l'élevage des animaux, selon la revendication 14, **caractérisée en ce que** l'embase (316b) comprend deux pièces superposées :
- une première pièce (316c) à section triangulaire, formant la face supérieure inclinée (316b1) sur laquelle est rapportée une couche sus-jacente (316a), et
- une seconde pièce (316d) à section rectangulaire, formant la face inférieure (316b2) prenant appui sur le sol (T) et recevant ladite première pièce (316c) à section triangulaire.
